# FASCICULE DE BREVET EUROPEEN

(11) **EP 1 616 242 B1**
(45) Date de publication et mention de la délivrance du brevet: **13.06.2007**
(21) Numéro de dépôt: 05739546.9
(22) Date de dépôt: 17.03.2005
(51) Int. Cl.: G06F 21/04

(54) **PROCEDE ET DISPOSITIF POUR CONTROLER L'ACCES A UN PERIFERIQUE**
VERFAHREN UND EINRICHTUNG ZUR STEUERUNG EINES ZUGRIFFS AUF PERIPHERIEGERÄTE
METHOD AND DEVICE FOR CONTROLLING AN ACCESS TO PERIPHERALS

(30) Priorité: 19.03.2004 FR 0402842; 12.08.2004 US 600912 P
(43) Date de publication de la demande: 18.01.2006
(73) Titulaire: Secure Machines S.A., 13420 Gemenos (FR)
(72) Inventeur: BRESSY, Philippe, F-83190 Ollioules (FR); PERROTEY, Gilles, F-13420 Gemenos (FR)
(74) Mandataire: Joly, Jean-Jacques
(86) Numéro de dépôt international: PCT/FR2005/000648
(87) Numéro de publication internationale: WO 2005/101160

(56) Documents cités:
- WO-A-97/43716
- US-A- 5 875 480
- US-A1- 2003 056 070
- US-B1- 6 190 257
- US-B1- 6 480 097
- US-B1- 6 510 521

## Description

### Arrière-plan de l'invention

La présente invention se situe dans le domaine de la sécurisation des appareils électroniques, et plus précisément dans celui de la protection de ces appareils contre des manipulations frauduleuses et des attaques à leur intégrité.

On connaît principalement deux types d'attaque, à savoir les attaques de type logiciel d'une part et celles par ajout ou substitution de composants matériels d'autre part.

Pour parer aux attaques logicielles, on connaît des outils dits de haut niveau, c'est-à-dire opérant au-dessus des couches du système d'exploitation (antivirus, pare-feu, etc.).

Malheureusement, ces outils même performants, présentent une fragilité importante dans le sens où ils peuvent être désactivés ou contournés avant même leur chargement en mémoire.

Le document US 6,480,097 décrit un ordinateur dont la mémoire système ROM est adaptée à fournir au démarrage un mot de passe à un dispositif de sécurisation contrôlant l'accès, par un processeur, à des ressources protégées.

Un consortium nommé « Trusted Computing Group » (TCG) vise aussi à palier cet inconvénient en fournissant des outils et des méthodes de protection des couches logicielles basses, ainsi qu'une indentification des périphériques physiques.

TCG propose en particulier une méthode de vérification de l'authenticité du BIOS (Basic Input Output System) d'un ordinateur personnel avant son lancement.

Une telle méthode utilise à cette fin un code de confiance CRTM (Core Root of Trust Measurement en anglais), ce code CRTM étant exécuté à la mise sous tension de l'ordinateur pour calculer une signature du BIOS.

Ce code de confiance CRTM constitue ainsi la base de toute la chaîne de sécurité logicielle dans l'équipement, et doit donc être protégé lui aussi contre les attaques.

Afin d'assurer la protection de ce code CRTM, il est traditionnellement prévu d'implémenter celui-ci dans un secteur spécifique d'une mémoire de type flash installée sur la carte mère de l'équipement.

L'inconvénient d'une telle solution est que la modification de ce code de confiance CRTM, pour une mise à jour par exemple, est impossible sans intervention physique sur la carte mère, comme le décrit le document IBM US 2003/0135727 publié le 17 juillet 2003.

Ce document propose une première solution à ce problème consistant à implémenter le code de confiance (CRTM) dans une carte accessoire à la carte mère (feature card en anglais), cette carte accessoire comportant son propre BIOS. Les mises à jour peuvent alors s'effectuer simplement par remplacement physique de cette carte accessoire.

Si cette solution est acceptable dans le cadre des spécifications élaborées par TCG, on comprend qu'elle ne l'est plus du tout lorsque l'on veut étendre la protection des boot loader et des BIOS au second type d'attaques, les attaques matérielles, du fait d'un utilisateur ou d'un tiers (console de jeux, code IMEI et SIM lock des GSM notamment).

Cette solution présente en effet un inconvénient majeur pour ce cas de protection étendue, puisqu'il suffit de retirer cette carte accessoire pour désactiver l'ensemble des fonctions de sécurité de l'équipement.

Le consortium TCG s'intéresse aussi au problème de l'intégrité matérielle des ordinateurs (PC) en contrôlant les périphériques utilisés. Plus précisément, ce consortium spécifie l'utilisation d'un module TPM qui enregistre les noms et emplacements des périphériques d'un ordinateur, afin de générer une alarme si un périphérique, par exemple un disque dur, a été remplacé entre deux boot. Il s'agit ici du contrôle de l'identité d'un périphérique.

Le document US 6,190,257 décrit une console de jeu adaptée à calculer un code d'authentification à partir d'une clef d'authentification reçue d'une cassette de jeu et à comparer ce code avec un code d'authentification reçu de cette cassette.

Dans le même état d'esprit et dans le contexte des consoles de jeux, le document WO 97/43716A (3DO) décrit une méthode d'authentification d'un périphérique (une cassette de jeu), par un processeur (celui de la console) pour lutter contre la copie illicite de cassette.

Le document 3DO propose d'intégrer une clef secrète dans la cassette, qui sera vérifiée par la console qui détient aussi cette clef. Pour éviter la substitution d'une cassette dûment authentifiée par une cassette pirate, 3DO propose en outre l'utilisation d'un mécanisme d'échange de données de sécurisation, entre la cassette et la console tout au long du jeu. La console vérifie ainsi qu'elle dialogue toujours avec la même cassette.

Cette solution nécessite malheureusement, l'implantation et la dissimulation d'une clef secrète et d'un programme spécifique avec un algorithme secret de sécurisation dans le périphérique (la cassette). Cette contrainte est un frein au développement de ce type de technologie.

Le document US 2003/056070 décrit un circuit pour contrôler l'accès à une mémoire Flash par un processeur. Ce circuit comporte des moyens pour générer une interruption. La routine d'interruption obtient d'un programme informatique voulant débloquer l'accès à la mémoire Flash, un code d'autorisation d'accès à cette mémoire. Après avoir vérifié cette autorisation, la routine d'interruption génère un signal électrique qui valide l'accès à la mémoire Flash.

La prise de décision d'ouverture de l'accès est donc gérée, entièrement par une entité logicielle du processeur, le circuit étant esclave de tout logiciel qui lui demanderait d'ouvrir l'accès par une écriture très simple d'un 1 ou d'un 0 sur un port de ce circuit.

### Objet et résumé de l'invention

L'invention permet de résoudre les inconvénients précités.

Plus précisément, et selon un premier aspect, l'invention concerne une unité matérielle pour contrôler l'accès, par un processeur, à un périphérique de ce processeur. Cette unité matérielle, externe au processeur, comporte :
- des moyens de déclenchement d'une interruption du processeur, dite interruption de contrôle ;
- des moyens d'obtention, en provenance de ce processeur et consécutivement à ce déclenchement, d'un code d'autorisation d'accès au périphérique ;
- des moyens de génération d'une valeur de référence selon une loi prédéterminée ;
- des moyens de comparaison de ce code d'autorisation d'accès avec la valeur de référence prédéterminée ; et
- des moyens dits de validation adaptés à générer un signal électrique de validation d'un signal électrique d'accès au périphérique, en fonction du résultat de ladite comparaison.

Ainsi, le mécanisme selon l'invention repose sur l'émission, par le processeur, de codes d'autorisation d'accès, contrôlés par une unité matérielle, placée devant le périphérique, en coupure de bus.

Le code d'autorisation d'accès est reçu par l'unité matérielle de contrôle d'accès, après que celle-ci ait fait une requête explicite au processeur pour l'obtention de ce code, sous la forme d'une interruption dirigée vers ce processeur. L'unité matérielle sait ainsi de façon certaine, que le code d'autorisation d'accès lui a été fourni par le processeur.

Cette caractéristique permet d'obtenir un contrôle d'accès au périphérique très efficace car elle permet de s'assurer que le code d'autorisation d'accès est reçu de façon certaine en provenance d'un organe de confiance constitué par la routine d'interruption de contrôle.

Autrement dit, l'invention repose sur l'utilisation d'un composant logiciel, (programme informatique) qui constitue un point unique d'accès au périphérique, et qui contrôle en coopération et via l'unité matérielle de contrôle d'accès, le signal électrique d'accès au périphérique.

Ce composant logiciel est préférentiellement situé dans une zone sûre et contrôlée du processeur.

L'invention permet ainsi de contrôler l'accès au périphérique d'un processeur en validant au plus bas niveau, et de façon matérielle, le signal électrique d'accès à ce périphérique. Ce périphérique peut notamment être choisi parmi un écran, un clavier, une mémoire, un contrôleur d'une interface de communication, une unité de gestion mémoire (MMU) ou une unité de protection de mémoire (MPU).

Lorsque l'invention est utilisée pour contrôler l'accès en écriture à la mémoire flash comportant le code de démarrage (boot loader), elle permet la mise à jour de ce code de démarrage sans intervention physique, tout en protégeant ce code de manipulations frauduleuses.

Dans la suite de ce document, nous appellerons "périphérique" tout type de composant électronique (écran, clavier, mémoire, interface de communication, interface de carte à puce, MMU, MPU, ...), que ceux-ci soient discrets ou "intégrés" dans des FPGA ou ASIC.

De même, nous appellerons "signal électrique d'accès" tout signal électrique devant être activé pour la sélection (signal de type « ChipSelect », CS) du périphérique ou l'écriture (signal de type "WRITE-ENABLE", WE) sur ce périphérique.

De même nous appellerons « interruption », tout moyen adapté à dérouter l'exécution d'un logiciel, de façon asynchrone ou non.

Afin de renforcer considérablement la sécurité du système, l'interruption de contrôle est une interruption non masquable, ce qui signifie qu'il n'est pas possible de masquer le déroutement précité.

L'homme du métier comprendra, qu'en fonction de l'architecture choisie, différents types de signaux peuvent être utilisés à cet effet, et notamment :
- le signal NMI pour l'architecture de la famille INTEL x86 ;
- le niveau IPL<7> pour l'architecture de la famille MOTOROLA 68K
- les cycles d'erreur d'adresse ou de data liés au signal /BERR sur l'architecture MC68K,
- les 'ABORT exception' sur l'architecture ARM7TDMI.

Conformément à la présente invention, un accès au périphérique ainsi protégé n'est possible que sur présentation à l'unité matérielle de contrôle d'accès audit périphérique d'un code d'autorisation d'accès compatible avec la valeur de référence prédéterminée connue de cette unité matérielle.

L'invention permet ainsi notamment la protection d'une mémoire dite sécurisée, du type par exemple de celle contenue dans un téléphone mobile conforme à la norme GSM pour la mémorisation des conditions commerciales souscrites par abonnement avec un opérateur (SIM Lock).

La substitution frauduleuse de ces règles SIM-Lock ne devient possible que sur présentation d'un code d'autorisation d'accès valide à l'unité matérielle de contrôle de l'accès à cette mémoire.

L'invention permet aussi de mettre à jour le BIOS ou le système d'exploitation d'un appareil, à distance. On pourra donc aisément mettre à jour les téléphones portables, et ce, directement avec la liaison sans fil GSM, sans que le client ne se déplace vers un centre de mise à jour.

L'invention peut ainsi être utilisée pour empêcher toute modification frauduleuse du BIOS d'un PC, ce qui augmente grandement la sécurité de ce PC, notamment quand le BIOS contient des mécanismes de sécurité de plus haut niveau.

Préférentiellement, l'unité matérielle de contrôle comporte en outre des moyens d'obtention d'un code de déclenchement, et les moyens de déclenchement de l'interruption de contrôle sont adaptés à déclencher l'interruption consécutivement à l'obtention du code de déclenchement.

Ce code de déclenchement peut par exemple être envoyé par le processeur avant tout accès au périphérique. On met ainsi un mécanisme totalement bouclé entre le processeur et l'unité matérielle qui fait que l'unité matérielle de contrôle d'accès sollicite systématiquement un code d'autorisation d'accès auprès du processeur avant de valider le signal d'accès.

Préférentiellement, l'unité matérielle de contrôle d'accès comporte des moyens de comparaison de ce code de déclenchement avec la valeur de référence prédéterminée, lesdits moyens de déclenchement étant adaptés à déclencher l'interruption de contrôle en fonction du résultat de ladite comparaison.

Ainsi, sur présentation d'un code de déclenchement erroné, un autre traitement peut être mis en place, comme explicité ci-dessous.

Ainsi, dans une variante de réalisation, l'unité matérielle de contrôle d'accès selon l'invention comporte des moyens de déclenchement d'une interruption du processeur, dite interruption d'alarme, lorsque ledit code d'autorisation d'accès ou ledit code de déclenchement est différent de la valeur de référence prédéterminée. Cette interruption d'alarme est préférentiellement une interruption non masquable.

L'unité matérielle de contrôle d'accès selon l'invention comporte des moyens de génération de la valeur de référence précitée selon une loi prédéterminée.

Cette caractéristique permet avantageusement de renforcer le contrôle d'accès au périphérique car le pirate devrait au surplus connaître la loi prédéterminée pour être en mesure de présenter un code d'autorisation d'accès valide à l'unité matérielle de contrôle d'accès.

Dans un mode préféré de réalisation, la valeur de référence prédéterminée est un compteur initialisé à la mise sous tension de l'unité matérielle, et la loi prédéterminée consiste à incrémenter ce compteur à chaque obtention du code d'autorisation d'accès.

La mise en oeuvre de cette loi prédéterminée peut notamment être réalisée par un compteur associé à un automate d'états finis, ce qui évite l'utilisation plus onéreuse d'un (co-)processeur, et limite le coût de fabrication de l'unité matérielle dans son ensemble.

Selon une autre caractéristique avantageuse, les moyens de validation de l'unité matérielle de contrôle d'accès au périphérique comportent des moyens de combinaison logique adaptés à :
- recevoir un signal électrique de demande d'accès à ce périphérique ;
- recevoir le signal de validation; et
- valider le signal électrique d'accès en fonction d'un état du signal électrique de demande d'accès, d'un état du signal de validation, et d'une logique représentée dans une table de vérité.

Selon cette caractéristique, on valide ainsi l'accès au périphérique lorsque deux conditions sont réunies, à savoir d'une part la présence d'une demande d'accès au périphérique par un composant tiers, par exemple un processeur, et d'autre part lorsque le résultat des comparaisons précitées est représentatif de l'obtention d'un code d'autorisation d'accès valide par l'unité matérielle du contrôle.

Préférentiellement, le signal d'accès résulte de la combinaison "ET logique" entre le signal de demande d'accès et le signal de validation. Ce moyen de réalisation est particulièrement aisé à mettre en oeuvre.

Dans un mode préféré de réalisation, l'unité matérielle de contrôle d'accès selon l'invention, comporte des moyens de lecture d'un état du signal électrique de demande d'accès, et des moyens de déclenchement d'une interruption d'alarme, préférentiellement non masquable, en fonction de cet état et de l'état du signal électrique de validation d'accès.

Cette caractéristique permet avantageusement de déclencher cette interruption d'alarme, lorsque l'état du signal électrique de demande d'accès est représentatif d'une demande d'accès au périphérique, sans qu'un code d'autorisation d'accès n'ait été présenté à l'unité matérielle de contrôle d'accès.

Dans un mode préféré de réalisation, l'unité matérielle de contrôle d'accès selon l'invention comporte des moyens d'inhibition du signal de validation, cette inhibition étant préférentiellement effectuée consécutivement à un ou plusieurs accès au périphérique.

Cette caractéristique permet avantageusement de renforcer le contrôle d'accès au périphérique, puisque celui-ci doit s'exercer régulièrement, voire même avant chaque accès au périphérique.

Dans un autre mode de réalisation, l'inhibition du signal de validation est effectuée après un délai prédéterminé compté à partir de la génération du signal électrique de validation d'accès, ou à partir de l'obtention du code d'accès.

Cette caractéristique permet avantageusement d'autoriser l'accès au périphérique sans contrôle durant ce délai, ce qui améliore les performances globales du système. Cette caractéristique est particulièrement intéressante lorsque le volume de données échangées avec ce périphérique est important comme dans le cas d'un écran.

Corrélativement, l'invention vise un procédé pour contrôler l'accès, par un processeur, à un périphérique de ce processeur. Ce procédé comporte les étapes suivantes :
- déclenchement d'une interruption du processeur, dite interruption de contrôle, préférentiellement non masquable ;
- obtention, en provenance du processeur et consécutivement audit déclenchement, d'un code d'autorisation d'accès au périphérique ;
- génération d'une valeur de référence selon une loi prédéterminée ;
- comparaison du code d'autorisation d'accès avec la valeur de référence prédéterminée ;
- génération d'un signal électrique de validation d'un signal d'accès au périphérique, en fonction du résultat de ladite étape de comparaison.

Conformément à l'invention, ce procédé est mis en oeuvre par une unité matérielle externe au processeur.

Les avantages et caractéristiques particuliers de ce procédé de contrôle d'accès étant les mêmes que ceux décrits précédemment en référence à l'unité matérielle de contrôle, ils ne seront pas rappelés ici. Ce procédé consiste essentiellement à vérifier la validité d'un ou plusieurs code d'autorisation d'accès, nécessairement reçu en provenance d'un organe de confiance, en le comparant à des valeurs de référence prédéterminées générées selon une loi, et à valider un signal électrique d'accès au périphérique en fonction de cette comparaison.

Le périphérique peut notamment être une unité de gestion de mémoire.

L'invention peut protéger ainsi l'accès à l'unité de gestion de la mémoire (MMU). Ceci permet de créer deux environnements systèmes rigoureusement étanches sur un même processeur. Si de plus, on assure un espace d'échanges de données contrôlées entre ces deux environnements, l'homme du métier comprendra que l'on peut aisément construire des appareils dont certaines fonctions (système d'exploitation ou applications sensibles de type paiement, authentification, protection des droits des auteurs et de la copie) sont isolées des applications plus ouvertes et donc plus sensibles aux attaques (Browser Intemet, chargement de jeux, de vidéo, email etc..).

Le périphérique contenu dans le processeur peut également être un contrôleur d'écriture dans la mémoire d'amorçage du processeur.

Ce mode préféré de réalisation permet ainsi de sécuriser la mémoire d'amorçage du processeur, cette protection rendant impossible la modification frauduleuse des données contenues dans cette mémoire, zone dont la sécurité est très critique en ce qu'elle héberge souvent des appels à des procédures de sécurisation de plus haut niveau.

L'invention concerne aussi un procédé de gestion d'accès à un périphérique. Ce procédé de gestion comporte une étape de mise en oeuvre d'une routine associée à une interruption de contrôle, préférentiellement non masquable. Cette routine de contrôle comporte :
- une étape de génération selon la loi prédéterminée, d'un code d'autorisation d'accès au périphérique ; et
- une étape d'envoi de ce code d'autorisation d'accès à une unité matérielle de contrôle d'accès telle que décrite brièvement ci-dessus.

Ce procédé consiste essentiellement à fournir, en provenance d'un organe de confiance (à savoir le processeur mettant en oeuvre la routine d'interruption de contrôle) des codes d'autorisation d'accès, ces codes étant comparés par l'unité matérielle de contrôle avec des valeurs de référence prédéterminées générées selon une loi pour autoriser ou non l'accès au périphérique.

L'invention vise aussi un programme informatique comportant une instruction d'accès à un périphérique et une instruction d'envoi d'un code de déclenchement à une unité matérielle de contrôle d'accès à ce périphérique telle que décrite brièvement ci-dessus, préalablement à l'exécution de cette instruction d'accès.

Préférentiellement, ce programme informatique comporte en outre des moyens de génération du code de déclenchement selon la loi prédéterminée de génération du code d'autorisation d'accès.

Ce programme informatique constitue un point unique d'accès au périphérique, préférentiellement situé dans une zone sûre et contrôlée du processeur. Ce programme contrôle, en coopération avec l'unité matérielle, le signal électrique d'accès à ce périphérique.

L'invention vise aussi un processeur adapté à mettre en oeuvre un procédé de contrôle d'accès, un procédé de gestion d'accès, et/ou un programme informatique tels que décrits brièvement ci-dessus.

### Brève description des dessins

D'autres aspects et avantages de la présente invention apparaîtront plus clairement à la lecture du mode particulier de réalisation qui va suivre, cette description étant donnée uniquement à titre d'exemple non limitatif et faite en référence aux dessins annexés, sur lesquels :
- la figure 1 représente une unité matérielle de contrôle d'accès conforme à l'invention dans un mode préféré de réalisation,
- les figures 2a et 2b représentent sous forme d'automates, les principales étapes de procédés de contrôle d'accès conformes à l'invention,
- la figure 3 représente sous forme d'organigramme, les principales étapes d'une routine d'interruption de contrôle conforme à l'invention dans un mode préféré de réalisation ; et
- la figure 4 représente, sous forme d'organigramme, les principales étapes d'un programme accédant à un périphérique protégé, conformément à la présente invention.

### Description détaillée de plusieurs modes de réalisation

L'exemple de réalisation de l'invention décrit ici concerne plus particulièrement la protection de l'accès à une mémoire d'amorçage contenue dans un processeur.

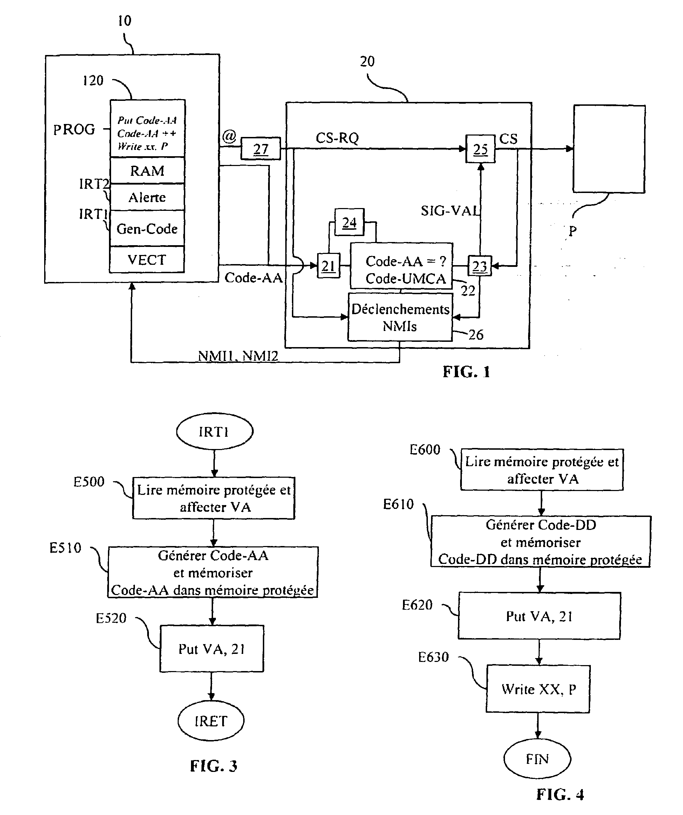

La **figure 1** représente une unité matérielle de contrôle d'accès 20, sous forme d'un composant externe à un processeur 10.

Dans ce mode de réalisation de l'invention, le processeur 10 coopérant avec l'unité matérielle de contrôle d'accès 20, comporte une mémoire d'amorçage 120 (en anglais BOOT-ROM) et une mémoire volatile RAM protégée. Cette mémoire d'amorçage 120 comporte une table de vecteurs d'interruption VECT, deux routines d'interruption, respectivement de contrôle IRT1 et d'alarme IRT2, et un programme informatique PROG.

Ce programme informatique PROG est un programme de contrôle d'un périphérique P, un tel programme étant habituellement connu sous le nom de pilote (en anglais : « driver »).

Dans le mode préféré de réalisation décrit ici, le périphérique P est un contrôleur d'écriture pour la mémoire d'amorçage 120 précitée.

L'unité matérielle de contrôle d'accès 20 comporte des moyens d'obtention d'un code Code-DD de déclenchement et d'un code Code-AA d'autorisation d'accès au périphérique P.

Dans le mode de réalisation décrit ici, le code de déclenchement Code-DD et le code d'autorisation d'accès Code-AA sont obtenus dans un même registre 21.

Dans le mode préféré de réalisation décrit ici :
- le code Code-AA d'autorisation d'accès est écrit dans le registre 21 par la routine d'interruption de contrôle IRT1 ; et
- et le code de déclenchement Code-DD est écrit dans le registre 21 par le pilote PROG du périphérique P.

En effet, conformément à l'invention, avant chaque instruction (WRITE, READ,...) d'accès au périphérique P, le programme informatique PROG écrit un code de déclenchement Code-DD dans le registre 21 de l'unité matérielle 20.

Dans le mode de réalisation décrit ici, le code de déclenchement Code-DD et le code d'autorisation d'accès Code-AA sont deux valeurs successives d'une même variable calculées selon la loi d'incrémentation prédéterminée.

Cette variable est mémorisée dans une zone protégée de la mémoire volatile RAM du processeur. Cette mémoire n'est accessible qu'au programme informatique PROG et à la routine d'interruption de contrôle IRT1.

L'unité matérielle de contrôle d'accès 20 comporte également des moyens 24 adaptés à générer, selon une loi prédéterminée, une valeur de référence Code-UMCA lorsqu'un code d'autorisation Code-AA ou un code de déclenchement Code-DD est écrit dans le registre 21.

Dans le mode préféré de réalisation décrit ici, cette loi consiste à incrémenter le compteur Code-UMCA, celui-ci étant initialisé à la mise sous tension du processeur 10.

L'unité matérielle de contrôle d'accès 20 comporte également des moyens 22 de comparaison du code d'autorisation d'accès Code-AA (et du code de déclenchement Code-DD) obtenu dans le registre 21 avec la valeur de référence prédéterminée Code-UMCA, calculée par les moyens 24 de génération dé cette valeur.

Dans le mode préféré de réalisation décrit ici, ces moyens de comparaison 22 sont constitués par une logique câblée.

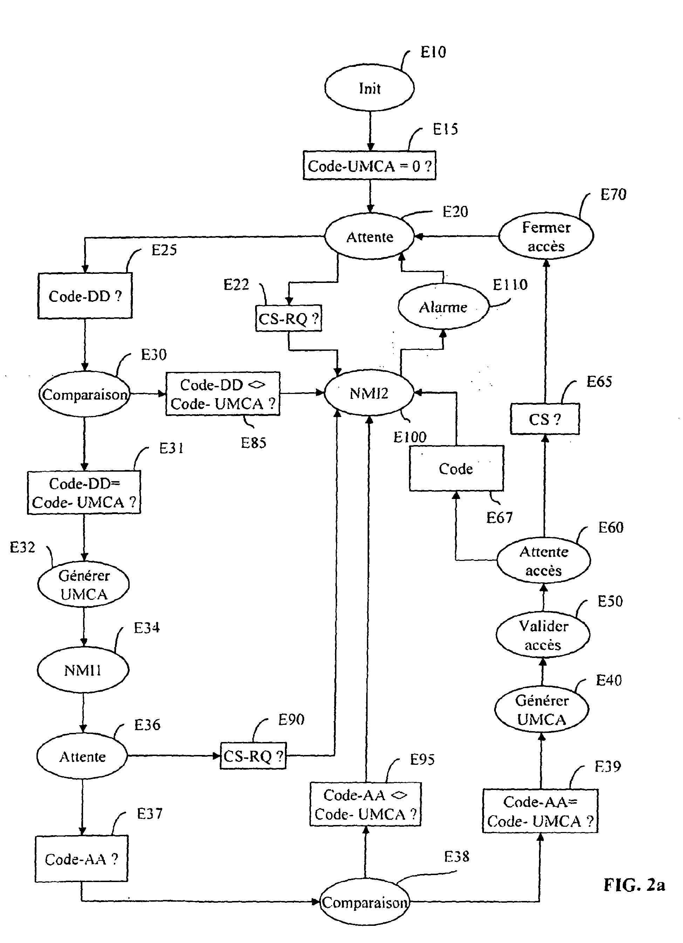

Quoi qu'il en soit, ces moyens de comparaison 22 sont adaptés. à envoyer un premier signal à une unité 26 de déclenchement d'une interruption, lorsque le code de déclenchement Code-DD est comparé égal à la valeur courante du code de référence Code-UMCA. Ceci sera décrit ultérieurement en référence à la figure 2a.

Sur réception de ce premier signal, les moyens 26 de déclenchement d'une interruption génèrent un signal d'interruption. Ce signal d'interruption est dans l'exemple décrit ici un signal d'interruption non masquable NMI1.

Sur réception de ce signal d'interruption non masquable NMI1, le processeur exécute, grâce à la table de vecteur d'interruption VECT, la routine d'interruption de contrôle IRT1.

Cette routine d'interruption de contrôle IRT1 met en oeuvre une fonction informatique Gen-Code adaptée à calculer une nouvelle valeur du code d'autorisation d'accès Code-AA selon une loi prédéterminée, à mémoriser cette nouvelle valeur dans la mémoire protégée, et à écrire cette nouvelle valeur Code-AA dans le registre 21 de l'unité matérielle de contrôle d'accès 20.

Cette loi prédéterminée est identique à celle mise en oeuvre par les moyens 24 de génération de la valeur de référence Code-UMCA. Ainsi, dans le mode de réalisation préféré décrit ici, cette loi est une loi d'incrémentation et le code d'autorisation d'accès Code-AA est égal à la valeur du code de déclenchement Code-DD plus un.

Lorsque les moyens 21 d'obtention du code d'autorisation d'accès Code-AA reçoivent ce code d'autorisation Code-AA en provenance de la routine d'interruption IRT1 de contrôle, les moyens 24 de génération d'une valeur de référence Code-UMCA génèrent une nouvelle valeur de référence selon la loi prédéterminée d'incrémentation.

Ces deux nouvelles valeurs sont alors comparées par les moyens 22 de comparaison décrits précédemment.

Conformément à l'invention, les moyens 22 de comparaison sont adaptés à positionner une valeur représentative du résultat de la comparaison de ces deux nouvelles valeurs dans une bascule 23 de l'unité matérielle de contrôle d'accès 20.

Dans l'exemple de réalisation décrit ici, nous supposerons que la logique câblée 22 positionne la valeur 1 dans la bascule 23 lorsque le nouveau code d'autorisation d'accès Code-AA et la nouvelle valeur de référence prédéterminée Code-UMCA sont égaux.

Ainsi, dans ce mode préféré de réalisation décrit ici, le contenu de la bascule 23 est positionné à 1 lorsque les codes de déclenchement Code-DD et d'autorisation Code-AA reçus successivement en provenance du pilote PROG et de la routine d'interruption de contrôle IRT1 sont égaux aux deux valeurs de référence code-UMCA prédéterminées générées par les moyens 24 sur réception des codes.

Conformément à ce mode préféré de réalisation, lorsque la bascule 23 est positionnée à 1, celle-ci génère un signal électrique de validation SIG-VAL à destination de moyens de combinaison logique 25 de l'unité matérielle de contrôle d'accès 20.

Ainsi dans ce mode préféré de réalisation, le signal de validation SIG-VAL est généré, lorsque les deux conditions précitées sont réunies.

Avant de transmettre le code de déclenchement Code-DD à l'unité matérielle de contrôle d'accès 20, le pilote PROG génère une nouvelle valeur selon la loi prédéterminée, c'est-à-dire dans le mode décrit ici, l'incrémente, et mémorise cette nouvelle valeur dans la mémoire volatile RAM protégée.

Le pilote du périphérique P exécute ensuite une instruction d'accès au périphérique P.

De façon connue de l'homme du métier, cette instruction génère, en sortie d'un décodeur d'adresse 27, un signal électrique d'accès, de type Chip-Select CS à destination du périphérique P.

Conformément à la présente invention, ce signal d'accès n'est pas directement transmis au périphérique P, mais vient en entrée des moyens de combinaison logique 25 précités.

Dans la suite de ce document, ce signal sera dénommé signal électrique de demande d'accès CS-RQ.

Les moyens de combinaison logique 25 qui reçoivent en entrée d'une part le signal électrique CS-RQ de demande d'accès au périphérique P et, d'autre part, le signal de validation SIG-VAL comportent également une table de vérité adaptée, de façon connue, à générer un signal d'accès de type « chip select » CS, à destination du périphérique P.

Cette table de vérité 25 permet en d'autres termes la validation du signal électrique d'accès au périphérique P, au sens de la présente invention.

Dans le mode préféré de réalisation décrit ici, le signal d'accès CS en sortie des moyens 25 de combinaison logique est fourni en entrée de la bascule 23.

Dans ce mode de réalisation, lorsqu'un accès au périphérique P est réalisé, c'est-à-dire lorsque l'état du signal d'accès CS est haut, la valeur de la bascule 23 est remise à 0.

Ceci a pour effet d'inhiber le signal de validation SIG-VAL en sortie de cette même bascule 23 et donc d'invalider tout accès au périphérique P.

Dans un autre mode de réalisation, le signal de validation SIG-VAL est inhibé non pas à chaque accès au périphérique P, mais de façon cyclique, par exemple tous les cinq accès.

Dans un autre mode de réalisation préféré, le signal d'accès CS n'est pas rebouclé sur la bascule 23, celle-ci étant adaptée à inhiber automatiquement le signal de validation SIG-VAL après un délai prédéterminé compté à partir de la génération de ce même signal, ou à partir de l'obtention du code de déclenchement Code-DD.

Dans le mode préféré de réalisation décrit ici, les moyens de comparaison 22 sont adaptés à envoyer un deuxième signal à l'unité 26 de déclenchement d'une interruption lorsqu'elle détecte, par comparaison, qu'un code obtenu dans le registre 21 est différent de la valeur de référence prédéterminée Code-UMCA générée sur réception de ce code.

Sur réception de ce deuxième signal, les moyens 26 de déclenchement d'une interruption envoient un deuxième signal d'interruption à la mémoire d'amorçage 120. Dans le mode décrit ici, il s'agit d'un signal d'interruption non masquable NMI2.

Ainsi, si un programme hostile écrit un code aléatoire dans le registre 21, les moyens de comparaison 22 déclencheront une interruption non masquable NMI2.

Sur réception de ce deuxième signal d'interruption, le processeur exécute la routine d'interruption d'alarme IRT2 pour le traitement d'accès frauduleux au périphérique P.

La **figure 2a** représente sous forme d'automate à états finis les principales étapes d'un procédé de contrôle d'accès conforme à l'invention dans un mode préféré de réalisation.

Sur cette figure, les « bulles » représentent des états, les flèches des transitions, et les rectangles des conditions nécessaires et suffisantes à la réalisation des transitions.

Dans la suite de la description, on emploiera indifféremment les terminologies « étape » ou « état » connues de l'homme du métier des programmes informatiques.

Cet automate comporte un premier état E10 d'initialisation, duquel on sort (transition E15) lorsque la valeur de référence prédéterminée Code-UMCA est initialisée avec une valeur initiale, par exemple zéro, puis mémorisée dans la mémoire volatile RAM.

On entre alors dans un état d'attente E20.

Lorsque dans cet état d'attente E20 l'unité matérielle de contrôle d'accès reçoit un code de déclenchement Code-DD (transition E25), on entre dans un état E30 de comparaison de ce code de déclenchement Code-DD avec la valeur de référence prédéterminée Code-UMCA.

En revanche, lorsque dans cet état d'attente E20, on détecte un signal électrique de demande d'accès CS-RQ au périphérique P (transition E22), on entre dans un état E100 de déclenchement d'une interruption non masquable d'alarme NMI2.

On quitte automatiquement cet état E100 de déclenchement d'une interruption non masquable d'alarme NMI2, pour entrer dans un état E110 de gestion d'alarme.

Dans un mode de réalisation préféré, l'état E110 de gestion d'alarme entraîne l'exécution d'un code terminal, (génération d'une condition de RESET). Dans d'autres modes de réalisations, diverses réactions sont envisageables en fonction de l'application. Ces modes de réalisation ne sont pas l'objet de ce brevet et ne seront pas détaillés ici.

Une fois cette procédure de gestion d'alarme terminée, on peut effacer l'alarme et revenir dans l'état E20 d'attente décrit précédemment

Lorsque depuis l'état E30 de comparaison, on détermine que le code de déclenchement Code-DD est différent de la valeur de référence prédéterminée Code-UMCA (transition E85), on entre dans l'état E100 de déclenchement d'une interruption d'alarme non masquable NMI2 décrit précédemment.

En revanche, lorsque depuis l'état E30 de comparaison, on détermine que la valeur du code de déclenchement Code-DD est égale à la valeur de référence prédéterminée Code-U MCA (transition E31), on entre dans un état E32 de génération d'une nouvelle valeur de référence prédéterminée Code-UMCA selon la loi d'incrémentation prédéterminée.

Cet état E32 de génération d'une nouvelle valeur de référence Code-UMCA, est suivi d'un état E34 de déclenchement d'une interruption non masquable de contrôle NMl1.

Une fois cette interruption non masquable de contrôle NMI1 déclenchée, on entre dans un état E36 d'attente d'un code d'autorisation d'accès Code-AA.

Si dans cet état E36 d'attente d'un code d'autorisation d'accès code AA, on détecte un signal électrique de demande d'accès CS-RQ (transition E90) , on entre dans l'état E100 de déclenchement d'une interruption d'alarme non masquable NMI2.

En revanche, lorsque dans l'état E36 d'attente, on obtient un code d'autorisation d'accès Code-AA (transition E37) , on entre dans un état E38 de comparaison de ce code d'autorisation d'accès Code-AA avec une nouvelle valeur de référence courante Code-UMCA.

Si au cours de cette état E38 de comparaison on détermine que le code d'autorisation d'accès Code-AA est différent de la valeur de référence Code-UMCA (transition E95), on entre dans l'état E100 de déclenchement d'une interruption non masquable d'alarme NMI2.

En revanche, si ces deux valeurs sont égales (transition E39), on sort de l'état E38 de comparaison pour entrer dans un état E40 de génération d'une nouvelle valeur de référence Code-UMCA.

On sort automatiquement de cet état E40 de génération pour entrer dans un état E50 de génération d'un signal électrique de validation SIG-VAL du signal d'accès au périphérique P.

Ensuite, et automatiquement, on quitte cet état E50 de génération du signal électrique de validation SIG-VAL pour entrer dans un état E60 dans lequel on attend que l'accès au périphérique P ait effectivement lieu.

Lorsque dans cet état E60 d'attente on détecte que l'accès a effectivement eu lieu (transition E65), on entre dans un état E70 dans lequel on inhibe le signal de validation SIG-VAL.

On sort ensuite automatiquement de cet état E70 d'inhibition pour retourner à l'état d'attente E20 décrit précédemment.

Dans un autre mode de réalisation, lorsque dans l'état E60 d'attente on détecte l'obtention d'un code dans le registre 21 (transition E67), on entre dans l'état E100 de déclenchement d'une interruption non masquable d'alarme NMI2, ce code d'autorisation d'accès ayant nécessairement été envoyé à l'unité matérielle de contrôle d'accès par un tiers mal intentionné. Ce mode de réalisation permet de renforcer la sécurité du système en détectant des accès frauduleux au périphérique après la validation de l'accès (état E60).

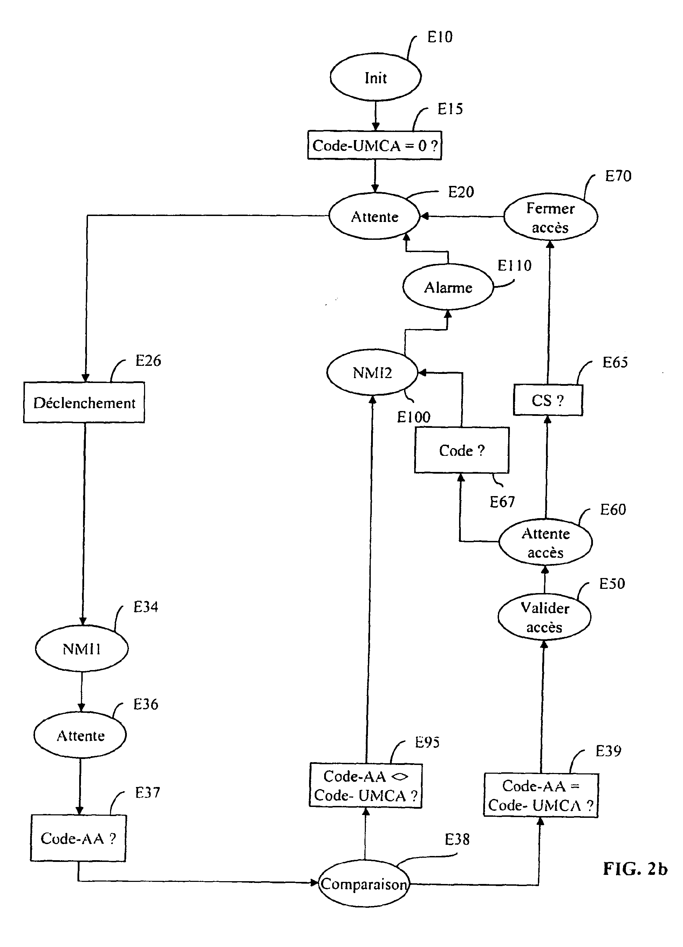

La figure 2b représente un diagramme d'état d'un procédé de contrôle d'accès conforme à l'invention dans un deuxième mode de réalisation.

Ce mode de réalisation de l'invention est simplifié dans le sens où il ne comporte pas d'étape E25 de réception d'un code de déclenchement Code-DD. Bien entendu toute étape (E30, E31, E32, E85) de traitement de ce code de déclenchement Code-DD est supprimée.

L'étape E25 est remplacée par une étape E26 de déclenchement, celui-ci pouvant se réaliser par tout moyen connu de l'homme du métier susceptible de générer une interruption.

L'étape E26 de déclenchement est suivie automatiquement par l'étape E34 de génération d'une interruption non masquable NMI1 de contrôle décrite en référence à la figure 4a.

Dans ce mode de réalisation, le code d'autorisation Code-AA étant une constante, l'étape E40 de génération d'une valeur de référence Code-UMCA est supprimée.

La routine d'interruption de contrôle IRT1 présente dans le registre 21 la valeur mémorisée par le programme informatique PROG dans la mémoire protégée.

La **figure 3** représente les principales étapes E500 à E520 d'une routine d'interruption non masquable de contrôle IRT1 mise en oeuvre par un processeur.

Cette routine est activée lorsque l'unité matérielle de contrôle d'accès 20 génère une interruption non masquable de contrôle NMI1.

La routine IRT1 décrite ici comporte une première étape E500 au cours de laquelle on mémorise dans une variable VA le contenu d'une variable Code-AA comportant le code d'autorisation d'accès du même nom.

Dans le mode de réalisation décrit en référence à la figure 4a l'étape E500 de lecture du code d'autorisation d'accès Code-AA est suivie par une étape E510 au cours de laquelle on génère un nouveau code d'autorisation d'accès Code-AA selon la loi prédéterminée décrite précédemment. Au cours de cette même étape, on mémorise cette nouvelle valeur du code d'autorisation d'accès Code-AA dans la mémoire protégée.

L'étape E510 de génération et de mémorisation du nouveau code d'autorisation d'accès Code-AA est suivie par une étape E520 d'envoi du contenu de la variable VA à l'unité matérielle de contrôle d'accès 20.

Dans le mode de réalisation préféré décrit ici, cette étape d'envoi consiste à écrire le contenu de la variable VA dans le registre 21.

Dans le mode de réalisation décrit en référence à la figure 4b, l'étape E500 de lecture du code d'autorisation d'accès Code-AA est suivie par cette étape E520.

Quoi qu'il en soit, l'étape E520 d'envoi du code d'autorisation d'accès est suivie par une instruction de type IRET connue de l'homme du métier, qui consiste d'une part à effacer la source de l'interruption NMI1 et à revenir de ladite interruption.

Le procédé de gestion d'accès conforme à l'invention comporte, de façon optionnelle, une routine d'interruption d'alarme IRT2 en réponse à une interruption non masquable NMI2 en provenance de l'unité matérielle de contrôle d'accès 20.

Cette interruption non masquable d'alarme consiste essentiellement à générer une alerte et/ou à traiter l'accès non autorisé selon des règles adéquates.

La **figure 4** représente les principales étapes E600 à E630 d'un programme informatique PROG comportant des instructions d'accès à un périphérique P sécurisé conformément à l'invention, dans le mode de réalisation de la figure 2a.

Ce programme informatique comporte deux étapes E600 et E610 identiques ou similaires respectivement aux étapes E500 de lecture du code d'autorisation d'accès, et E510 de génération et de mémorisation d'un code d'autorisation d'accès décrit précédemment en référence à la figure 3.

Ainsi, au cours de ces deux étapes, le programme informatique P mémorise dans une variable VA le contenu du code de déclenchement Code-DD courant, génère selon la loi prédéterminée (loi d'incrémentation) un nouveau de déclenchement Code-DD, et mémorise cette nouvelle valeur dans la mémoire sécurisée partagée avec la routine d'interruption IRT1.

Préalablement à chaque étape E630 d'accès au périphérique P, le programme informatique PROG comporte une étape E620 au cours de laquelle on envoie le contenu de la variable VA à l'unité de contrôle matériel d'accès 20, ce qui revient, dans le mode de réalisation décrit ici, à écrire le contenu de cette variable dans le registre 21.

Cette étape E620 d'envoi du code d'autorisation d'accès VA à l'unité de contrôle matériel d'accès 20 est suivie par l'étape E630 d'accès au périphérique P.

Dans une mise en oeuvre de l'invention selon le mode de réalisation de la figure 2b, le programme informatique PROG comporte une étape de mémorisation d'une valeur constante dans la mémoire protégée du processeur, puis une étape de déclenchement de la première interruption de contrôle non masquable IRT1, préalablement à l'étape E630 d'accès au périphérique.

Après l'accès, une valeur quelconque différente de ladite constante est mémorisée dans la mémoire protégée du processeur.

Cette étape peut également être réalisée par la routine d'interruption de contrôle IRT1.

## Revendications

1. Unité matérielle pour contrôler l'accès (20), par un processeur (10), à un périphérique (P) de ce processeur, ladite unité matérielle (20) comportant :
- des moyens (26) de déclenchement d'une interruption dudit processeur, dite interruption de contrôle ;
- des moyens (21) d'obtention, en provenance dudit processeur et consécutivement audit déclenchement, d'un code d'autorisation d'accès (Code-AA) audit périphérique (P),
- des moyens internes (22) de comparaison dudit code d'autorisation d'accès (Code-AA) avec une valeur de référence prédéterminée (Code-UMCA) ; et
- des moyens dits de validation (22, 23, 25) adaptés à générer un signal électrique de validation (SIG_VAL) d'un signal électrique d'accès (CS, WE, PWR) audit périphérique (P), en fonction du résultat de ladite comparaison,
ladite unité matérielle (20) étant **caractérisée en ce qu'**elle est externe audit processeur (10) et **en ce qu'**elle comporte des moyens (24) de génération de ladite valeur de référence (Code-UMCA) selon une loi prédéterminée.

2. Unité matérielle de contrôle d'accès selon la revendication 1, **caractérisée en ce que** ladite interruption de contrôle est une interruption non masquable (NMI1).

3. Unité matérielle de contrôle selon la revendication 1 ou 2, **caractérisée en ce qu'**elle comporte en outre des moyens (21) d'obtention d'un code de déclenchement (Code-DD), et **en ce que** lesdits moyens (26) de déclenchement de ladite interruption de contrôle (NM11) sont adaptés à déclencher ladite interruption consécutivement à l'obtention dudit code de déclenchement (Code-DD).

4. Unité matérielle de contrôle d'accès selon la revendication 3, **caractérisée en ce qu'**elle comporte en outre des moyens (22) de comparaison dudit code de déclenchement (Code-DD) avec ladite valeur de référence prédéterminée (Code-UMCA), et **en ce que** lesdits moyens (26) de déclenchement, sont adaptés à déclencher ladite interruption de contrôle (NMI1) en fonction du résultat de ladite comparaison.

5. Unité matérielle de contrôle d'accès selon l'une quelconque des revendications 1 à 4, **caractérisée en ce que**lle comporte des moyens (26) de déclenchement d'une interruption dudit processeur, dite interruption d'alarme, lorsque ledit code d'autorisation d'accès (Code-AA) ou ledit code de déclenchement (Code-DD) est différent de la valeur de référence prédéterminée (Code-UMCA).

6. Unité matérielle de contrôle d'accès selon la revendication 5, **caractérisée en ce que** ladite interruption d'alarme est une interruption non masquable (NMI2).

7. Unité matérielle de contrôle d'accès selon l'une quelconque des revendications 1 à 6, **caractérisée en ce que** ladite valeur de référence prédéterminée (Code-UMCA) est un compteur initialisé à la mise sous tension de ladite unité matérielle (UMCA), et **en ce que**, selon ladite loi prédéterminée, on incrémente ledit compteur à chaque obtention dudit code d'autorisation d'accès (Code-AA).

8. Unité matérielle de contrôle d'accès selon l'une quelconque des revendications 1 à 7, **caractérisée en ce que** lesdits moyens de validation (22, 23, 25) comportent des moyens de combinaison logique (25) adaptés à :
- recevoir un signal électrique de demande d'accès (CS-RQ, WE-RQ) audit périphérique (P) ;
- recevoir ledit signal de validation (SIG_VAL) ; et
- valider ledit signal électrique d'accès (CS, WE) en fonction d'un état (RQ_0, RQ_1) dudit signal électrique de demande d'accès (CS-RQ, WE-RQ), d'un état (VAL_0, VAL_1) dudit signal de validation, et d'une logique représentée dans une table de vérité (25).

9. Unité matérielle de contrôle d'accès selon la revendication 8, **caractérisée en ce qu'**elle comporte des moyens (26) de lecture d'un état (RQ_0, RQ_1) dudit signal électrique de demande d'accès (CS_RQ, WE_RQ), et des moyens (26) de déclenchement d'une interruption dudit processeur, dite interruption d'alarme (NMI2), préférentiellement non masquable, en fonction de cet état (RQ_0, RQ_1) et dudit état (VAL_0, VAL_1) dudit signal électrique de validation d'accès (SIG_VAL).

10. Unité matérielle de contrôle d'accès selon l'une quelconque des revendications 1 à 9, **caractérisée en ce qu'**elle comporte des moyens d'inhibition (23) dudit signal de validation (SIG_VAL).

11. Unité matérielle de contrôle d'accès selon la revendication 10, **caractérisé en ce que** lesdits moyens d'inhibition (23) sont adaptés à inhiber ledit signal de validation (SIG_VAL) consécutivement à au moins un accès audit périphérique (P).

12. Unité matérielle de contrôle d'accès selon la revendication 10 ou 11, **caractérisée en ce que** lesdits moyens d'inhibition (23) sont adaptés à inhiber ledit signal de validation (SIG_VAL) après un délai prédéterminé compté à partir de la génération dudit signal électrique de validation d'accès (SIG_VAL), ou à partir de l'obtention dudit code d'accès (Code-AA).

13. Procédé pour contrôler l'accès, par un processeur (10), à un périphérique (P) de ce processeur, comportant les étapes suivantes :
- déclenchement (E34) d'une interruption dudit processeur, dite interruption de contrôle ; et
- obtention (E37), en provenance dudit processeur et consécutivement audit déclenchement, d'un code d'autorisation d'accès (Code-AA) audit périphérique (P),
- comparaison (E38) dudit code d'autorisation d'accès (Code-AA) avec une valeur de référence prédéterminée (Code-UMCA),
- génération (E50) d'un signal électrique de validation (SIG_VAL) d'un signal d'accès (CS, WE, PWR) audit périphérique (P), en fonction du résultat de ladite étape de comparaison (E30),
ledit procédé étant **caractérisé en ce qu'**il est adapté à être mis en oeuvre par une unité matérielle (20) selon l'une quelconque des revendications 1 à 12, externe audit processeur (10) et **en ce qu'**il comporte une étape (E40) de génération de ladite valeur de référence (UMCA) selon une loi prédéterminée.

14. Procédé de contrôle d'accès selon la revendication 13, **caractérisé en ce que** ladite interruption de contrôle est une interruption non masquable (NMl1).

15. Procédé de contrôle d'accès selon la revendication 13 ou 14, **caractérisé en ce que** ladite étape de déclenchement (E34) est effectuée consécutivement à une étape d'obtention (E25) d'un code de déclenchement (Code-DD).

16. - Procédé de contrôle d'accès selon la revendication 15, **caractérisé en ce qu'**il comporte en outre une étape (E30) de comparaison du code de déclenchement (Code-DD) avec ladite valeur de référence prédéterminée (Code-UMCA), et **en ce que** ladite étape (E34) de déclenchement est effectuée en fonction du résultat de ladite étape de comparaison (E30).

17. Procédé de contrôle d'accès selon l'une quelconque des revendications 13 à 16, **caractérisé en ce qu'**elle comporte une étape (E100), de déclenchement d'une interruption dudit processeur, dite interruption d'alarme, lorsque ledit code d'autorisation d'accès (Code-AA) ou ledit code de déclenchement (Code-DD) est différent de la valeur de référence prédéterminée (Code UMCA).

18. Procédé de contrôle d'accès selon la revendication 17, **caractérisé en ce que** ladite interruption d'alarme est une interruption non masquable (NM12).

19. Procédé de contrôle d'accès selon l'une quelconque des revendications 13 à 18, **caractérisé en ce que** ladite valeur de référence prédéterminée (Code-UMCA) étant un compteur, il comporte en outre une étape de d'initialisation (E10) dudit compteur, ledit compteur étant incrémenté au cours de ladite étape (E40) de génération.

20. Procédé de contrôle d'accès selon l'une quelconque des revendications 13 à 19, **caractérisé en ce que**, au cours de ladite étape (E50) de génération du signal de validation :
- on lit i'état (RQ_0, RQ_1) d'un signal électrique (CS-RQ, WE-RQ) de demande d'accès audit périphérique (P) ;
- on lit l'état (VAL_0, VAL_1 ) dudit signal de validation (SIG_VAL) ; et
- on valide ledit signal .électrique d'accès (CS, WE) en fonction dudit état (RQ_1 ) dudit signal. électrique de demande d'accès (CS_RQ, WE_RQ), dudit état (VAL_1 ) du signal de validation (SIG_VAL), et en fonction d'une règle logique.

21. Procédé de contrôle d'accès selon la revendication 20, **caractérisé en ce qu'**il comporte une étape (E20, E36) de lecture d'un état (RQ_0, RQ_1 ) dudit signal électrique de demande d'accès (CS_RQ, WE_RQ), et une étape (E100) de déclenchement d'une interruption masquable dudit processeur (10), dite interruption d'alarme, préférentiellement non masquable (NMI2), en fonction dudit état (RQ_0, RQ_1) et dudit état (VAL_0, VAL_1) dudit signal électrique de validation d'accès (SIG_VAL).

22. Procédé de contrôle d'accès selon l'une quelconque des revendications 13 à 21, **caractérisé en ce qu'**il comporte une étape (E70) d'inhibition dudit signal de validation (SIG_VAL).

23. Procédé de contrôle d'accès selon la revendication 22, **caractérisé en ce que** ladite étape (E70) d'inhibition est effectuée consécutivement à au moins une étape d'accès (E65) audit périphérique (P).

24. Procédé de contrôle d'accès selon la revendication 22 ou 23, **caractérisé en ce que** ladite étape d'inhibition est effectuée après un délai prédéterminé compté à partir de ladite étape (E50) de génération du signal de validation (SIG_VAL) ou à partir de l'étape (E25) d'obtention dudit code de déclenchement (Code-DD).

25. Procédé de gestion d'accès à un périphérique (P), **caractérisé en ce qu'**il comporte une étape de mise en oeuvre d'une routine (IRT1) associée à une interruption de contrôle, préférentiellement non masquable (NMI1), ladite routine de contrôle comportant :
une étape (E510) de génération, selon ladite loi prédéterminée, d'un code d'autorisation d'accès (Code-AA) audit périphérique (P) ; et
une étape (E520) d'envoi dudit code d'autorisation d'accès (Code-AA) à une unité matérielle de contrôle d'accès (20) conforme à l'une quelconque des revendications 1 à 12.

26. Procédé de gestion d'accès selon la revendication 25, **caractérisé en ce que** ledit code d'autorisation d'accès (Code-AA) étant un compteur, il comporte en outre une étape d'initialisation dudit compteur (Code-AA), et **en ce que** ladite étape (E510) de génération consiste à incrémenter ledit compteur (Code-AA) préalablement à chaque envoi (S100) de ce code (Code-AA) à ladite unité matérielle (20).

27. Procédé de gestion d'accès selon la revendication 25 ou 26, **caractérisé en ce qu'**il comporte en outre une étape de mise en oeuvre d'une routine d'interruption d'alarme (IRT2), ladite routine d'alarme comportant une étape de génération d'une alerte et/ou d'inhibition de l'utilisation dudit périphérique.

28. Programme informatique comportant une instruction (E630) d'accès à un périphérique (P), **caractérisé en ce qu'**il comporte une instruction (E620) d'envoi d'un code de déclenchement (Code-DD) à une unité matérielle de contrôle d'accès (20) dudit périphérique (P) conforme à l'une quelconque des revendications 1 à 12, préalablement à l'exécution de ladite instruction d'accès.

29. Programme informatique selon la revendication 28, **caractérisé en ce qu'**il comporte en outre des moyens de génération dudit code de déclenchement (Code-DD) selon ladite loi prédéterminée.

30. Processeur adapté à mettre en oeuvre un procédé de gestion d'accès conforme à l'une quelconque des revendications 25 à 27 et/ou un programme informatique conforme à la revendication 28 ou 29.

31. Utilisation d'une unité matérielle de contrôle d'accès (20) selon l'une quelconque des revendications 1 à 12, pour valider un signal d'accès à un périphérique (P) pouvant notamment être choisi parmi un écran, un clavier, une mémoire, un contrôleur d'une interface de communication, une unité de gestion mémoire (MMU) ou une unité de protection de mémoire (MPU).

## Claims

1. - Hardware unit for controlling access (20), by a processor (10) to a peripheral (P) of this processor, said hardware unit (20) including:
- means (26) of triggering an interrupt of said processor, termed a control interrupt;
- means (21) of obtaining, from said processor and after said triggering, an access authorisation code (Code-AA) to said peripheral (P);
- internal means (22) of comparing said access authorisation code (Code-AA) with a predetermined reference value (Code-UMCA); and
- so-called validation means (22, 23, 25) designed to generate an electrical signal (SIG_VAL) to validate an access electrical signal (CS, WE, PWR) to said peripheral (P), depending on the outcome of said comparison,
said hardware unit (20) being **characterised in that** it is external to said processor (10) and **in that** it includes means (24) of generating said reference value (Code-UMCA) according to a predetermined law.

2. - Access control hardware unit according to claim 1, **characterised in that** said control interrupt is a non-maskable interrupt (NMI1).

3. - Access control hardware unit according to claim 1 or 2, **characterised in that** it additionally includes means (21) of obtaining a trigger code (Code-DD), and **in that** said means (26) of triggering said control interrupt (NMI1) are designed to trigger said interrupt following the acquisition of said trigger code (Code-DD).

4. - Access control hardware unit according to claim 3, **characterised in that** it additionally includes means (22) of comparing said trigger code (Code-DD) with said predetermined reference value (Code-UMCA), and **in that** said triggering means (26) are designed to trigger said control interrupt (NMI1) depending on the outcome of said comparison.

5. - Access control hardware unit according to any one of claims 1 to 4, **characterised in that** it includes means (26) of triggering an interrupt of said processor, termed an alarm interrupt, when said access authorisation code (Code-AA) or said trigger code (Code-DD) is different from the predetermined reference value (Code-UMCA).

6. - Access control hardware unit according to claim 5, **characterised in that** said alarm interrupt is a non-maskable interrupt (NMI2).

7. - Access control hardware unit according to any one of claims 1 to 6, **characterised in that** said predetermined reference value (Code-UMCA) is a counter initialised when said hardware unit is switched on (UMCA), and **in that**, according to said predetermined law, said counter is incremented each time said access authorisation code (Code-AA) is obtained.

8. - Access control hardware unit according to any one of claims 1 to 7, **characterised in that** said validation means (22, 23, 25) include logic combination means (25) designed to:
- receive an electrical signal requesting access (CS-RQ, WE-RQ) to said peripheral (P);
- receive said validation signal (SIG_VAL); and
- validate said access electrical signal (CS, WE) as a function of a state (RQ_0, RQ_1) of said access request electrical signal (CS-RQ, WE-RQ), a state (VAL_0, VAL__1) of said validation signal, and a logic represented in a truth table (25).

9. - Access control hardware unit according to claim 8, **characterised in that** it includes means (26) of reading a state (RQ_0, RQ_1) of said access request electrical signal (CS_RQ, WE_RQ), and means (26) of triggering an interrupt of said processor, termed an alarm interrupt (NMI2), preferably non-maskable, as a function of this state (RQ_0, RQ_1) and of said state (VAL_0, VAL_1) of said access validation electrical signal (SIG_VAL).

10. - Access control hardware unit according to any one of claims 1 to 9, **characterised in that** it includes means (23) of inhibiting said validation signal (SIG_VAL).

11. - Access control hardware unit according to claim 10, **characterised in that** said inhibiting means (23) are designed to inhibit said validation signal (SIG_VAL) following at least one access to said peripheral (P).

12. - Access control hardware unit according to claim 10 or 11, **characterised in that** said inhibiting means (23) are designed to inhibit said validation signal (SIG_VAL) after a predetermined delay counted from the generation of said access validation electrical signal (SIG_VAL), or from the acquisition of said access code (Code-AA).

13. - Method of controlling access, by a processor (10) to a peripheral (P) of this processor, including the following steps:
- triggering (E34) an interrupt of said processor, termed control interrupt;
- obtaining (E37), from said processor and after said triggering, an access authorisation code (Code-AA) to said peripheral (P);
- comparing (E38) said access authorisation code (Code-AA) with a predetermined reference value (Code-UMCA); and
- generating (E50) an electrical signal (SIG_VAL) validating an access signal (CS, WE, PWR) to said peripheral (P), depending on the outcome of said comparison step (E30),
said method being **characterised in that** it is adapted to be implemented by a hardware unit (20) according to any one of claims 1 to 12, external to said processor (10) and **in that** it includes a step (E40) of generating said reference value (Code-UMCA) according to a predetermined law.

14. - Access control method according to claim 13, **characterised in that** said control interrupt is a non-maskable interrupt (NMI1).

15. - Access control method according to claim 13 or 14, **characterised in that** said triggering step (E34) is performed after a step of obtaining (E25) a trigger code (Code-DD).

16. - Access control method according to claim 15, **characterised in that** it additionally includes a step (E30) of comparing the trigger code (Code-DD) with said predetermined reference value (Code-UMCA), and **in that** said triggering step (E34) is performed depending on the outcome of said comparison step (E30).

17. - Access control method according to any one of claims 13 to 16, **characterised in that** it includes a step (E100) of triggering an interrupt of said processor, termed an alarm interrupt, when said access authorisation code (Code-AA) or said trigger code (Code-DD) is different from the predetermined reference value (Code-UMCA).

18. - Access control method according to claim 17, **characterised in that** said alarm interrupt is a non-maskable interrupt (NMI2).

19. - Access control method according to any one of claims 13 to 19, **characterised in that** said predetermined reference value (Code-UMCA) being a counter, it additionally includes a step (E10) of initialising said counter, said counter being incremented during said generation step (E40).

20. - Access control method according to any one of claims 13 to 18, **characterised in that**, during said step (E50) of generating the validation signal:
- the state (RQ_0, RQ_1) of an electrical signal (CS-RQ, WE-RQ) requesting access to said peripheral (P) is read;
- the state (VAL_0, VAL_1) of said validation signal (SIG_VAL) is read; and
- said access electrical signal (CS, WE) is validated as a function of said state (RQ_1) of said access request electrical signal (CS_RQ, WE_RQ), of said state (VAL_1) of the validation signal (SIG_VAL), and as a function of a logic rule.

21. - Access control method according to claim 20, **characterised in that** it includes a step (E20, E36) of reading a state (RQ_0, RQ_1) of said access request electrical signal (CS_RQ, WE_RQ), and a step (E100) of triggering a maskable interrupt of said processor (10), termed an alarm interrupt, preferably non-maskable (NMI2), as a function of said state (RQ_0, RQ_1) and of said state (VAL_0, VAL_1) of said access validation electrical signal (SIG_VAL).

22. - Access control method according to any one of claims 13 to 21 **characterised in that** it includes a step (E70) of inhibiting said validation signal (SIG_VAL).

23. - Access control method according to claim 22, **characterised in that** said inhibiting step (E70) is performed following at least one step (E65) of accessing said peripheral (P).

24. - Access control method according to claim 22 or 23, **characterised in that** said inhibiting step is performed after a predetermined delay counted from said step (E50) of generating the validation signal (SIG_VAL) or from the step (E25) of obtaining said trigger code (Code-DD).

25. - Method of managing access to a peripheral (P), **characterised in that** it includes a step of implementing a routine (IRT1) associated with a control interrupt, preferably non-maskable (NMI1), said control routine including:
- a step (E510) of generating, according to a predetermined law, an access authorisation code (Code-AA) to said peripheral (P) ; and
- a step (E520) of sending an access authorisation code (Code-AA) to an access control hardware unit (20) according to any one of claims 1 to 12.

26. - Method of managing access according to claim 25, **characterised in that** said access authorisation code (Code-AA) being a counter, it additionally includes a step of initialising said counter (Code-AA), and **in that** said generation step (E510) consists in incrementing said counter (Code-AA) before each sending (S100) of this code (Code-AA) to said hardware unit (20).

27. - Method of managing access according to claim 25 or 26, **characterised in that** it additionally includes a step of implementing an alarm interrupt routine (IRT2), said alarm routine including a step of generating an alert and/or inhibiting the use of said peripheral.

28. - Computer program including an instruction (E630) to access a peripheral (P), **characterised in that** it includes an instruction (E620) to send a trigger code (Code-DD) to an access control hardware unit (20) of said peripheral (P) according to any one of claims 1 to 12, before the execution of said access instruction.

29. - Computer program according to claim 28, **characterised in that** it additionally includes means of generating said trigger code (Code-DD) according to said predetermined law.

30. - Processor designed to implement a method of managing access according to any one of claims 25 to 27 and/or a computer program according to claim 28 or 29.

31. - Use of an access control hardware unit (20) according to any one of claims 1 to 12, to validate an access signal to a peripheral (P) which can in particular be selected from a screen, a keyboard, a memory, a communications interface controller, a memory management unit (MMU) or a memory protection unit (MPU).

## Patentansprüche

1. Hardware zur Kontrolle des Zugriffs (20) mittels eines Prozessors (10) auf ein Peripheriegerät (P) dieses Prozessors, wobei die Hardware (20) umfaßt:
- Mittel (26) zum Auslösen einer Unterbrechung des Prozessors, Kontrollunterbrechung genannt,
- Mittel (21), um von dem Prozessor und im Anschluß an das Auslösen einen Genehmigungscode für den Zugriff (Code-AA) zu dem Peripheriegerät (P) zu erhalten,
- interne Mittel (22) zum Vergleichen des Zugriffsgenehmigungscodes (Code-AA) mit einem vorbestimmten Referenzwert (Code-UMCA); und
- sogenannte Validierungsmittel (22, 23, 25), die dazu ausgebildet sind, ein elektrisches Validierungssignal (SIG_VAL) eines elektrischen Zugriffssignals (CS, WE, PWR) auf das Peripheriegerät (P) in Abhängigkeit des Ergebnisses des Vergleichs zu erzeugen,
wobei die Hardware (20) **dadurch gekennzeichnet ist, daß** sie zum Prozessor (10) extern angeordnet ist und daß sie Mittel (24) zur Erzeugung des Referenzwertes (Code-UMCA) nach einem vorbestimmten Gesetz umfaßt.

2. Hardware zur Kontrolle des Zugriffs nach Anspruch 1, **dadurch gekennzeichnet, daß** die Kontrollunterbrechung eine nicht maskierbare Unterbrechung (NMI1) ist.

3. Hardware zur Kontrolle des Zugriffs nach Anspruch 1 oder 2, **dadurch gekennzeichnet, daß** sie ferner Mittel (21) zum Erhalt eines Auslösecodes (Code-DD) umfaßt, und daß die Auslösemittel (26) der Kontrollunterbrechung (NMI1) derart ausgebildet sind, daß sie die Unterbrechung im Anschluß an den Erhalt des Auslösecodes (Code-DD) auslösen.

4. Hardware zur Kontrolle des Zugriffs nach Anspruch 3, **dadurch gekennzeichnet, daß** sie ferner Mittel (22) zum Vergleich des Auslösecodes (Code-DD) mit dem vorbestimmten Referenzwert (Code-UMCA) umfaßt, und daß die Auslösemittel (26) derart ausgebildet sind, daß sie die Kontrollunterbrechung (NMI1) in Abhängigkeit von dem Ergebnis des Vergleichs auslösen.

5. Hardware zur Kontrolle des Zugriffs nach einem der Ansprüche 1 bis 4, **dadurch gekennzeichnet, daß** sie Mittel (26) zum Auslösen einer Unterbrechung des Prozessors, Alarmunterbrechung genannt, wenn der Zugriffsgenehmigungscode (Code-AA) oder der Auslösecode (Code-DD) von dem vorbestimmten Referenzwert (Code-UMCA) abweicht, umfaßt.

6. Hardware zur Kontrolle des Zugriffs nach Anspruch 5, **dadurch gekennzeichnet, daß** die Alarmunterbrechung eine nicht maskierbare Unterbrechung (NMI2) ist.

7. Hardware zur Kontrolle des Zugriffs nach einem der Ansprüche 1 bis 6, **dadurch gekennzeichnet, daß** der vorbestimmte Referenzwert (Code-UMCA) ein Zähler ist, der bei der Inbetriebsetzung der Hardware (UMCA) initialisiert wird, und daß nach dem vorbestimmten Gesetz der Zähler bei jedem Erhalt des Zugriffsgenehmigungscodes (Code-AA) inkrementiert wird.

8. Hardware zur Kontrolle des Zugriffs nach einem der Ansprüche 1 bis 7, **dadurch gekennzeichnet, daß** die Validierungsmittel (22, 23, 25) logische Kombinationsmittel (25) umfassen, die dazu ausgebildet sind:
- ein elektrisches Signal der Anforderung des Zugriffs (CS-RQ, WE-RQ) auf ein Peripheriegerät zu empfangen,
- das Validierungssignal (SIG_VAL) zu empfangen; und
- das elektrische Zugriffssignal (CS, WE) in Abhängigkeit von einem Zustand (RQ_0, RQ_1) des elektrischen Zugriffsanforderungssignals (CS-RQ, WE-RQ), von einem Zustand (VAL_0, VAL_1) des Validierungssignals und einer in einer Wahrheitstafel (25) dargestellten Logik zu validieren.

9. Hardware zur Kontrolle des Zugriffs nach Anspruch 8, **dadurch gekennzeichnet, daß** sie Mittel (26) zum Ablesen eines Zustandes (RQ_0, RQ_1) des elektrischen Zugriffsanforderungssignals (CS_RQ, WE_RQ) und Mittel (26) zum Auslösen einer Unterbrechung des Prozessors, Alarmunterbrechung (NMI2) genannt, die vorzugsweise nicht maskierbar ist, in Abhängigkeit von diesem Zustand (RQ_0, RQ_1) und dem Zustand (VAL_0, VAL_1) des elektrischen Zugriffsvalidierungssignals (SIG_VAL) umfaßt.

10. Hardware zur Kontrolle des Zugriffs nach einem der Ansprüche 1 bis 9, **dadurch gekennzeichnet, daß** sie Mittel (23) zur Sperrung des Validierungssignals (SIG_VAL) umfaßt.

11. Hardware zur Kontrolle des Zugriffs nach Anspruch 10, **dadurch gekennzeichnet, daß** die Sperrmittel (23) derart ausgebildet sind, daß sie das Validierungssignal (SIG_VAL) im Anschluß an mindestens einen Zugriff zu dem Peripheriegerät (P) sperren.

12. Hardware zur Kontrolle des Zugriffs nach Anspruch 10 oder 11, **dadurch gekennzeichnet, daß** die Sperrmittel (23) derart ausgebildet sind, daß sie das Validierungssignal (SIG_VAL) nach einer vorbestimmten Frist nach der Erzeugung des elektrischen Zugriffsvalidierungssignals (SIG_VAL) oder ab dem Erhalt des Zugriffscodes (Code-AA) sperren.

13. Verfahren zur Kontrolle des Zugriffs durch einen Prozessor (10) auf ein Peripheriegerät (P) dieses Prozessors, umfassend die folgenden Schritte:
- Auslösen (E34) eine Unterbrechung des Prozessors, Kontrollunterbrechung genannt; und
- Erhalt eines Zugriffsgenehmigungscodes (Code-AA) auf das Peripheriegerät (P) vom Prozessor im Anschluß an das Auslösen,
- Vergleich (E38) des Zugriffsautorisierungscodes (Code-AA) mit einem vorbestimmten Referenzwert (Code-UMCA),
- Erzeugung (E50) eines elektrischen Validierungssignals (SIG_VAL) eines Zugriffssignals (CS, WE, PWR) zu dem Peripheriegerät (P) in Abhängigkeit vom Ergebnis des Vergleichsschritte (E30),
wobei das Verfahren **dadurch gekennzeichnet ist, daß** es an den Einsatz durch eine Hardware (20) nach einem der Ansprüche 1 bis 12, die extern zum Prozessor ist, angepaßt ist, und daß es einen Schritt (E40) der Erzeugung des Referenzwertes (UMCA) nach einem vorbestimmten Gesetz umfaßt.

14. Verfahren zur Kontrolle des Zugriffs nach Anspruch 13, **dadurch gekennzeichnet, daß** die Kontrollunterbrechung eine nicht maskierbare Unterbrechung (NMI1) ist.

15. Verfahren zur Kontrolle des Zugriffs nach Anspruch 13 oder 14, **dadurch gekennzeichnet, daß** der Schritt des Auslösens (E34) im Anschluß an einen Schritt (E25) des Erhalts eines Auslösecodes (Code-DD) erfolgt.

16. Verfahren zur Kontrolle des Zugriffs nach Anspruch 15, **dadurch gekennzeichnet, daß** es ferner einen Schritt (E30) des Vergleichs des Auslösecodes (Code-DD) mit dem vorbestimmten Referenzwert (Code-UMCA) umfaßt, und daß der Auslöseschritt (E34) in Abhängigkeit vom Ergebnis des Vergleichsschrittes (E30) erfolgt.

17. Verfahren zur Kontrolle des Zugriffs nach einem der Ansprüche 13 bis 16, **dadurch gekennzeichnet, daß** es einen Schritt (E100) des Auslösens einer Unterbrechung des Prozessors, Alarmunterbrechung genannt, umfaßt, wenn der Zugriffsgenehmigungscode (Code-AA) oder der Auslösecode (Code-DD) von dem vorbestimmten Referenzwert (Code UMCA) abweicht.

18. Verfahren zur Kontrolle des Zugriffs nach Anspruch 17, **dadurch gekennzeichnet, daß** die Alarmunterbrechung eine nicht maskierbare Unterbrechung (NMl2) ist.

19. Verfahren zur Kontrolle des Zugriffs nach einem der Ansprüche 13 bis 18, **dadurch gekennzeichnet, daß**, da der vorbestimmte Referenzwert (Code-UMCA) ein Zähler ist, es ferner einen Schritt der Initialisierung (E10) des Zählers umfaßt, wobei der Zähler während des Erzeugungsschrittes (E40) inkrementiert wird.

20. Verfahren zur Kontrolle des Zugriffs nach einem der Ansprüche 13 bis 19, **dadurch gekennzeichnet, daß** während des Schrittes (E50) der Erzeugung des Validierungssignals:
- der Zustand (RQ_0, RQ_1) eines elektrischen Signals (CS-RQ, WE-RQ) der Zugriffsanforderung auf das Peripheriegerät (P) abgelesen wird;
- der Zustand (VAL_0, VAL_1) des Validierungssignals (SIG_VAL) abgelesen wird; und
- das elektrische Zugriffssignal (CS, WE) in Abhängigkeit vom Zustand (RQ_1) des elektrischen Zugriffsanforderungssignals (CS_RQ, WE_RQ), des Zustandes (VAL_1) des Validierungssignals (SIG_VAL) und von einer logischen Regel validiert wird.

21. Verfahren zur Kontrolle des Zugriffs nach Anspruch 20, **dadurch gekennzeichnet, daß** es einen Schritt (E20, E36) es Ablesens eines Zustandes (RQ_0, RQ_1) des elektrischen Zugriffsanforderungssignals (CS_RQ, WE_RQ) und einen Schritt (E100) des Auslösens einer maskierbaren Unterbrechung des Prozessors (10), Alarmunterbrechung genannt, die vorzugsweise nicht maskierbar ist (NMI2), in Abhängigkeit vom Zustand (RQ_0, RQ_1) und vom Zustand (VAL_0, VAL_1) des elektrischen Zugriffsvalidierungssignals (SIG_VAL) umfaßt.

22. Verfahren zur Kontrolle des Zugriffs nach einem der Ansprüche 13 bis 21, **dadurch gekennzeichnet, daß** es einen Schritt (E70) der Sperrung des Validierungssignals (SIG_VAL) umfaßt.

23. Verfahren zur Kontrolle des Zugriffs nach Anspruch 22, **dadurch gekennzeichnet, daß** der Sperrschritt (E70) im Anschluß an mindestens einen Schritt (E65) des Zugriffs auf das Peripheriegerät (P) erfolgt.

24. Verfahren zur Kontrolle des Zugriffs nach Anspruch 22 oder 23, **dadurch gekennzeichnet, daß** der Sperrschritt nach einer vorbestimmten Frist ab dem Schritt (E50) der Erzeugung des Validierungssignals (SIG_VAL) oder ab dem Schritt (E25) des Erhalts des Auslösecodes (Code-DD) erfolgt.

25. Verfahren zur Zugriffssteuerung auf ein Peripheriegerät (P), **dadurch gekennzeichnet, daß** es einen Schritt des Einsatzes einer Routine (IRT1) in Verbindung mit einer Kontrollunterbrechung, die vorzugsweise nicht maskierbar (NMl1 ) ist, umfaßt, wobei die Kontrollroutine umfaßt:
- einen Schritt (E510) der Erzeugung eines Zugriffsgenehmigungscodes (Code-AA) zu dem Peripheriegerät (P) nach dem vorbestimmten Gesetz; und
- einen Schritt (E520) des Sendens des Zugriffsautorisierungscodes (Code-AA) zu einer Hardware zur Kontrolle des Zugriffs (20) nach einem der Ansprüche 1 bis 12.

26. Verfahren zur Zugriffssteuerung nach Anspruch 25, **dadurch gekennzeichnet, daß**, da der Zugriffsgenehmigungscode (Code-AA) ein Zähler ist, es ferner einen Schritt der Initialisierung des Zählers (Code-AA) umfaßt, und daß der Erzeugungsschritt (E510) darin besteht, den Zähler (Code-AA) vor jedem Senden (S100) dieses Codes (Code-AA) an die Hardware (20) zu inkrementieren.

27. Verfahren zur Zugriffssteuerung nach Anspruch 25 oder 26, **dadurch gekennzeichnet, daß** es ferner einen Schritt des Einsatzes einer Alarmunterbrechungsroutine (IRT2) umfaßt, wobei die Alarmroutine einen Schritt der Erzeugung eines Alarms und/oder der Sperrung der Verwendung des Peripheriegeräts umfaßt.

28. lnformatikprogramm, umfassend einen Zugriffsbefehl (E360) auf ein Peripheriegerät (P), **dadurch gekennzeichnet, daß** es einen Befehl (E620) zum Senden eines Auslösecodes (Code-DD) an eine Zugriffskontrollhardware (20) des Peripheriegeräts (P) nach einem der Ansprüche 1 bis 12 vor der Ausführung des Zugriffsbefehls umfaßt.

29. lnformatikprogramm nach Anspruch 28, **dadurch gekennzeichnet, daß** es ferner Mittel zur Erzeugung des Auslösecodes (Code-DD) nach dem vorbestimmten Gesetz umfaßt.

30. Prozessor, der dazu ausgebildet ist, ein Zugriffssteuerungsverfahren nach einem der Ansprüche 25 bis 17 und/oder ein Informatikprogramm nach Anspruch 28 oder 29 einzusetzen.

31. Verwendung einer Zugriffskontrollhardware (20) nach einem der Ansprüche 1 bis 12, um ein Zugriffssignal auf ein Peripheriegerät (P) zu validieren, das insbesondere unter einem Bildschirm, einer Tastatur, einem Speicher, einem Kontroller einer Kommunikationsschnittstelle, einer Speichersteuereinheit (MMU) oder einer Speicherschutzeinheit (MPU) ausgewählt werden kann.
